# EUROPÄISCHE PATENTANMELDUNG

(11) **EP 0 774 706 A1**
(43) Veröffentlichungstag der Anmeldung: **21.05.1997**
(21) Anmeldenummer: 96117901.7
(22) Anmeldetag: 08.11.1996
(51) Int. Cl.: G06F 1/00, G11B 20/00

(54) **Verfahren und Vorrichtung zum Schutz gespeicherter Daten**

(30) Priorität: 17.11.1995 DE 19542910
(71) Anmelder: Deutsche Telekom AG, 53113 Bonn (DE)
(72) Erfinder: Moos, Rainer, 57080 Siegen (DE)

(57) **Zusammenfassung**

**2.1.** Beliebige Informationsspeicher (magnetisch, optisch, biologisch-organisch sind für Speicherung, Weiterverarbeitung, Archivierung oder Transport von Informationen größeren Umfangs geeignet; können aber nur durch kryptographische Verfahren gegen Ausforschen gesichert werden. Das unentdeckte physikalische Kopieren und Manipulieren der Informationen bleibt jedoch möglich
**2.2.** Mit einer Kombination der nicht intelligenten beliebigen Informationsspeicher mit intelligenten Speichern werden durch eine Verknüpfung ihrer Informationen, verbunden mit Komprimieren, Verschlüsseln, Personalisieren und Authentikation, Massenspeichern so sicher wie Chips.
**2.3.** Alle Anwendungen mit erhöhtem Sicherheitsbedarf für größere Informationsmengen gegen Kopieren und Manipulieren der Informationen.

## Beschreibung

Die Erfindung bezieht sich auf ein Verfahren zum Schutz gespeicherter Daten der im Oberbegriff des Patentanspruch 1 und auf eine Vorrichtung zum Schutz gespeicherter Daten der im Oberbegriff des Patentanspruch 3 näher definierten Art. Derartige Verfahren und Vorrichtungen sind allgemein bekannt und werden für viele Zwecke angewendet.

Herkömmliche Datenträger (Massenspeicher jeglicher Art, magnetisch, optisch, biologisch-organisch) sind dazu geeignet, Informationen zur späteren Weiterverarbeitung, Archivierung oder Transport zu speichern. Solche Informationen können zwar z. B. durch kryptographische Verfahren gegen Ausforschen gesichert werden; ein physikalisches Kopieren der Informationen bleibt jedoch dennoch sehr einfach möglich.

Bei diesen Informationen, die zur Aufbewahrung oder zum Transport auf Datenträger gespeichert wurden, besteht generell die Möglichkeit, die Informationen, vor einer berechtigten Weiterverarbeitung, durch unbefugte Dritte zu manipulieren. Die Herkunft des Datenträgers, ja selbst kryptographisch geschützter Datenmengen, läßt sich nur sicher durch Auslesen von Informationen feststellen. Damit ist jedoch nicht sichergestellt, daß das Medium nicht zwischenzeitlich gewechselt oder der Inhalt kopiert wurde.

Bei vielen Anwendungen kommt es aber auf die Originalität, d.h. auf das einmalige Vorhandensein einer Information an. Beispielsweise sollte ein elektronischer Fahrschein nur einmal abgefahren werden können.

Aufgabe der Erfindung ist es, die Daten auf beliebigen nicht intelligenten Speichern gegen nicht autorisierte Manipulationen zu schützen und deren Ursprung und Originalität zur Sicherung des Ursprungs, der Integrität und der Originalität von Daten mit Hilfe kryptographischer Versiegelung des Datenträgers und der Daten nachvollziehbar zu machen.

Die Erfindung löst diese Aufgabe mit den im Kennzeichen des Patentanspruchs 1 aufgeführten Verfahrensschritten.

Eine vorteilhafte Weiterbildung dieses Verfahrens ist im Kennzeichen des Patentanspruchs 2 beschrieben.

Eine Vorrichtung, die für die Lösung dieser Aufgabe geeignet ist, beschreibt das Kennzeichen des Patentanspruchs 2.

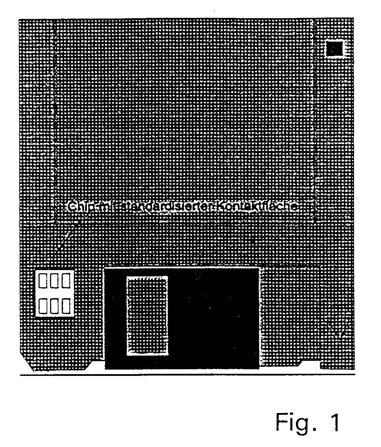

Die Erfindung wird nachfolgend anhand von Ausführungsbeispielen näher erläutert. In der zugehörigen Zeichnung zeigt die
- Fig. 1: eine Diskette mit integriertem intelligenten Prozessorchip.

Unter beliebigen speichernden Datenträgern sind Datenträger beliebiger Art (magnetisch, optisch, biologisch-organisch) und Speicherkapazität zu verstehen, die in der Lage sind, Daten zu speichern, ohne diese aktiv zu schützen.

Intelligente Speicher sind Speicher mit meist geringer Speicherkapazität, die, durch ihre Bauart bedingt, in der Lage sind, gespeicherte Daten aktiv zu schützen, d. h. durch einen aktiven Prozeß zu verarbeiten.

Unter fester Zuordnung ist eine feste Paarbildung nach der Art von Schloß und Schlüssel, bzw. eine untrennbare Verbindung beider Speicher zu verstehen.

Der intelligente Datenträger (Chip) enthält einen asymmetrischen Schlüssel, bestehend aus öffentlichem und geheimem Teil, einen symmetrischen Schlüssel zur Authentikation, eine Identität und einen Signaturzähler. Er ist durch seine Bauart in der Lage, diese Komponenten aktiv zu sichern. In bestimmte Bereiche können Daten nachgeladen werden.

Das asymmetrische Schlüsselpaar ist fest mit der Identität verknüpft. Der symmetrische Schlüssel dient zur Abgrenzung verschiedener Systeme gegeneinander. Die Erzeugung, Verwaltung und Personalisierung dieser Informationen muß in einem gesicherten Bereich stattfinden. Mit der Erzeugung und Personalisierung eines solchen Schlüsselgeheimnisses wird ein Datenträger automatisch einem Gültigkeitsbereich zugeordnet. Alle Systeme, die im Besitz des symmetrischen Authentikationsschlüssels sind, sind in der Lage, solche Datenträger gültig zu beschreiben.

Systeme zum Beschreiben oder Lesen so gesicherter Datenträger bestehen aus:
- herkömmlicher Schreib-/Lesevorrichtung,
- ISO-genormter Chipkontaktierfläche an geeigneter Stelle,
- Softwaremodul zur Bedienung des Chips.

Zunächst kann ein solcher Datenträger auf herkömmliche Weise gelesen oder beschrieben werden. Soll nun der Ursprung, die Integrität und die Originalität der Daten gesichert werden, muß nach dem Schreiben der Daten in die Sicherheitssoftware verzweigt werden.

Ein standardisierter Algorithmus erzeugt ein eindeutiges Komprimat der Daten. Dieses Komprimat wird mit der Identität und einem Signaturzähler aus dem Chip angereichert, mit dem geheimen Teil des asymmetrischen Schlüssels verschlüsselt und in den Speicherbereich des Chips abgelegt. Der Signaturzählerstand wird auf dem zu schützenden Datenträger eingetragen.

Die Funktionalität des geheimen asymmetrischen Schlüssels wir mit Hilfe eines sogenannten Challenge und Response mit Hilfe des symmetrischen Schlüssels gesichert. Dies bedeutet, daß der benutzergruppenabhängige symmetrische Schlüssel auch in der Sicherheitssoftware enthalten sein muß.

Ein autorisiertes Zielsystem kann einen so gesicherten Datenträger eindeutig identifizieren. Dazu wird wiederum ein Challenge Response zwischen Software und Chip durchgeführt und somit die Gültigkeit des Datenträgers festgestellt. Anschließend werden die Daten auf herkömmliche Weise gelesen und mit dem gleichen Algorithmus wie beim Schreiben komprimiert. Das nach dem Schreiben des Datenträgers erzeugte Kryptogramm wird aus dem Speicher des Chips ausgelesen und mit dem öffentlichen Teil des asymmetrischen Schlüssels entschlüsselt.

Um die Daten im Zielsystem als gültig anzuerkennen, müssen folgende Übereinstimmungs-Bedingungen erfüllt sein:
- selbst erzeugtes = entschlüsseltes Komprimat,
- Chip-ID = entschlüsselte ID,
- Signaturzählerstand auf Datenträger = entschlüsselter Signaturzählerstand
Ist auch nur eine dieser Bedingungen nicht erfüllt, wird der Datenträger vom Zielsystem abgewiesen.

Der programmierbare Prozessor verwaltet so eine Verknüpfung der auf der Diskette gespeicherten Informationen und dem physikalischen Datenträger mit der Identität eines berechtigten Benutzers oder Prozesses, der auf diese Informationen Zugriff erhält. Die Identität des Benutzers oder Prozesses wird durch den intelligenten Prozessorchip über eine gesonderte Schnittstelle abgeprüft. Kann die Identität des berechtigten Benutzers oder Prozesses nicht dem Prozessorchip bewiesen werden, wird der Zugriff auf die gespeicherten Informationen verhindert.

Zusätzlich kann durch eine vom Prozessor erzeugte und verwaltete und auf dem Datenträger gespeicherte Information ein Kopieren der gespeicherten Informationen verhindert bzw. nachgewiesen werden.

Der Inhalt eines Datenträgers wird mittels kryptographischer Verfahren mit dem personalisierten Schlüsselgeheimnis aus einem aktiven Speicher verknüpft und somit versiegelt. Somit können etwaige Veränderungen durch "Fremde" jederzeit festgestellt werden, denn nur "bekannte" Systeme sind in der Lage, gültige Datenträger zu erzeugen, die Integrität zu sichern und den Beweis des Originals durch eine Referenz festzulegen. Als "bekannt" werden Systemkomponenten oder Benutzer durch Anerkennung durch alle am System beteiligten Systemkomponenten oder Benutzer definiert.

Eine kryptographisch gesicherte Datenmenge wird nur durch das physikalische Vorhandensein des verknüpften personalisierten intelligenten Speichers zum Original (Dokument). Die personalisierende Instanz gewährleistet nachprüfbar die Ausstellung und Eindeutigkeit des Referenzgeheimnisses des intelligenten Speichers.

Die Sicherheit wird durch die intelligente Systemkomponente automatisch bzw. manuell erbracht, wobei die Sicherheitsfunktion ab- und anschaltbar ist.

Das Verfahren ist auch in Kommunikationssysteme integrierbar und für vernetzte Systemkomponenten zum Schutz der Informationen einsetzbar.

Die Verbindung bzw. das Aufbringen einer intelligenten Sytemkomponente ist in Fig. 1 nur beispielhaft für eine Diskette gezeigt. Sie kann jedoch allgemein mit einem beliebigen Informationsspeicher (magnetisch, optisch, biologisch-organisch) durch eine mechanische oder logische Verknüpfung erfolgen und vor unberechtigter Manipulation sichern und ein Kopieren, Verändern oder sonstiges Umwandeln und Variieren verhindern und die Originalität der Information gewährleisten.

## Patentansprüche

1. Verfahren zum Schutz gespeicherter Daten in beliebigen speichernden Datenträgern,
**dadurch gekennzeichnet**, daß
- die in dem beliebigen speichernden Datenträger eingetragenen Daten komprimiert und mit der Identität und einem Signaturzähler aus einem fest zugeordneten intelligenten progammierbaren Speicherchip angereichert werden,
- ein Teil der komprimierten Daten in die Sicherheitssoftware im Speicherbereich des fest zugeordneten intelligenten progammierbaren Speicherchips verzweigt werden,
- die Daten im Speicherbereich des fest zugeordneten intelligenten progammierbaren Speicherchips auf an sich bekannte Art verschlüsselt und personalisiert werden,
- und die Daten im beliebigen speichernden Datenträger gegen unberechtigten Zugriff und Manipulation durch notwendige intelligente Systemkomponenten und kryptographische Mechanismen aus dem Speicherbereich des zugeordneten intelligenten progammierbaren Speicherchips geschützt werden.

2. Verfahren nach Anspruch 1, dadurch gekennzeichnet, daß die notwendigen intelligenten Systemkomponenten und kryptographische Mechanismen aus dem Speicherbereich des zugeordneten intelligenten progammierbaren Speicherchips mittels Personalisierung der zu schützenden Informationen nachprüfbar gewährleistet werden.

3. Vorrichtung zum Schutz gespeicherter Daten in beliebigen speichernden Datenträgern, **dadurch gekennzeichnet**, daß auf dem beliebigen speichernden Datenträger ein progammierbarer Speicherchip aufgebracht ist.
